Europäisches Patentamt

European Patent Office

Office européen des brevets

(19)

(11) **EP 1 219 985 A1**

(12) **EUROPEAN PATENT APPLICATION**
published in accordance with Art. 158(3) EPC

(43) Date of publication:
**03.07.2002 Bulletin 2002/27**

(51) Int Cl.[7]: **G02B 6/16**, G02B 6/10

(21) Application number: **00961139.3**

(22) Date of filing: **20.09.2000**

(86) International application number:
**PCT/JP00/06442**

(87) International publication number:
**WO 01/22135 (29.03.2001 Gazette 2001/13)**

(84) Designated Contracting States:
**AT BE CH CY DE DK ES FI FR GB GR IE IT LI LU MC NL PT SE**

(30) Priority: **20.09.1999 JP 26543499**

(71) Applicant: **Sumitomo Electric Industries, Ltd.
Osaka-shi, Osaka 541-0041 (JP)**

(72) Inventors:
• **HARUMOTO, Michiko,c/o Yokohama Works of Sumitomo
Yokohama-shi, Kanagawa 244-8588 (JP)**

• **SHIGEHARA, Masakazu,
Yokohama Works of Sumitomo
Yokohama-shi Kanagawa 244-8588 (JP)**

(74) Representative: **Grünecker, Kinkeldey,
Stockmair & Schwanhäusser Anwaltssozietät
Maximilianstrasse 58
80538 München (DE)**

(54) **METHOD FOR FABRICATING OPTICAL LOSS FILTER AND OPTICAL LOSS FILTER**

(57) The present invention relates to a method of manufacture of an optical loss filter, which is an optical component applicable to optical communications and related fields, comprising a long-period fiber grating to reduce the wavelength dependence of the gain of rare earth-doped fiber amplifiers in particular, as well as to an optical loss filter manufactured by this method. A method of manufacturing an optical loss filter of this invention is a method of manufacturing an optical loss filter in an optical waveguide having a core with a prescribed refractive index, comprising a first process in which first and second long-period gratings are formed in the axial direction of a core having the photosensitivity of the optical waveguide, providing a prescribed interval therebetween, and a second process in which the core between the first long-period grating and the second long-period grating is irradiated with ultraviolet light. In this method, because the amount of irradiation of the core with ultraviolet light can be changed continuously, by adjusting the amount of irradiation, an optical loss filter with a desired transmission characteristic can be obtained easily and with good precision. Also, the number of long-period gratings formed can be made small, so that manufacture in compact form is possible.

**Fig.6B**

EP 1 219 985 A1

**Description**

TECHNICAL FIELD

This invention relates to a method of manufacturing an optical loss filter, which is an optical component applicable to optical communications and other fields, comprising a long-period fiber grating to reduce the wavelength dependence of the gain of rare earth-doped fiber amplifiers in particular, and an optical loss filter manufactured by this method.

BACKGROUND ART

A representative optical fiber communication system comprises an optical transmitter including a light source, an optical fiber line, one end of which is connected to this optical transmitter, and an optical receiver, which is connected to the other end of this optical fiber line. An optical amplifier, which amplifies the optical signals in a prescribed wavelength range, is installed in the optical fiber line. In such an optical fiber communication system, often WDM signals in the 1.5 μm band are used, and as the optical amplifier, a fiber amplifier doped with erbium (Er) or some other rare earth element is used. This erbium-doped fiber amplifier (EDFA) forms an inverted population of electron states with the EDFA by means of pumping light at a prescribed wavelength; induced emission is caused by the injection of light in the 1.5 μm band into the inverted population region, resulting in amplification of the incident light.

In such an optical fiber communication system, the amplified spontaneous emission (ASE) generated through the interaction within the EDFA of the pumping light power and Er ions becomes a noise component. This ASE causes a decline in gain and an increase in the noise figure, and because the ASE has a power distribution with a peak at 1.53 μm, if optical amplification is repeated by a plurality of EDFAs, scattering occurs in the gain of optical signals with different wavelength components, under the influence of the ASE power distribution (a wavelength dependence occurs in the amplification gain of the optical amplifier). Consequently, in WDM (wavelength division multiplexing) systems in which a plurality of optical signals with different wavelengths are transmitted, different gains occur for each channel (for each optical signal), and so there is the problem that bit error rates are higher for a number of channels as a result. In order to resolve these problems, an optical loss filter comprising a wavelength-selective, non-reflective long-period grating was developed as a gain equalizer for EDFA or the like.

This long-period grating has a periodic structure with periodically differing refractive indices, formed within the core along the axis of an optical waveguide, and is a grating which induces coupling between the core mode and cladding mode propagating along the optical waveguide. The period of this grating is set such that the optical path length difference between the core mode and cladding mode within one period is equal to a prescribed wavelength, so that there is strong power conversion from the core mode to a cladding mode. As a result, the long-period grating acts to radiate the core mode, and the core mode intensity is attenuated over a narrow band centered on a prescribed wavelength (the loss wavelength).

The central wavelength of the wavelength spectrum of light coupled from the core to the cladding by the long-period grating, that is, the loss wavelength, is determined by the following equation.

$$\beta_{core}^{(lm)} - \beta_{cladding}^{(n)} = 2\pi / \Lambda \tag{1}$$

Here 1, m are core mode orders (for the fundamental mode LP01, l=0, m=1), $\beta_{core}^{(lm)}$ is the core mode propagation constant specified by (lm), $\beta_{cladding}^{(n)}$ is the propagation constant of the nth cladding mode, and $\Lambda$ is the period of the long-period grating.

The propagation constants $\beta_{core}$, $\beta_{cladding}$ are wavelength-dependent parameters; from the above equation (1), it is seen that by adjusting the period $\Lambda$ when forming the long-period grating, the loss wavelength of the long-period grating can be controlled. In addition, $\beta_{core}$ depends on the effective refractive index of the core, and $\beta_{cladding}$ depends on the effective refractive index of the cladding, so that when the grating period is held constant, the loss wavelength of the long-period grating depends mainly on the difference in the effective refractive index of the core and cladding in the portion in which the long-period grating is formed. The effective refractive index of the core where the grating is formed can be regarded as based on the average value of a modulated refractive index; the difference in effective refractive index of core and cladding in the grating formation portion depends on the difference between the average value of the refractive index of core and the average value of the refractive index of cladding. The amplitude of core refractive index fluctuation changes according to the amount of irradiation of ultraviolet rays during grating formation, and the core refractive index changes accordingly; hence by adjusting the amount of ultraviolet ray irradiation when forming the long-period grating, the effective refractive index difference between core and cladding can be adjusted, and the loss wavelength of the long-period grating can be controlled.

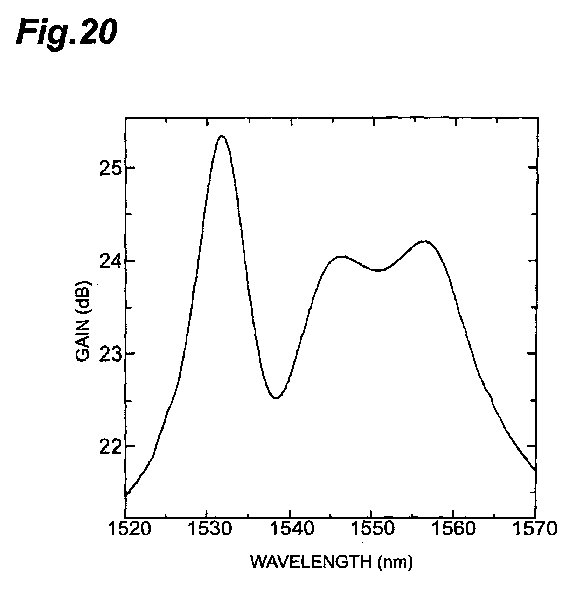

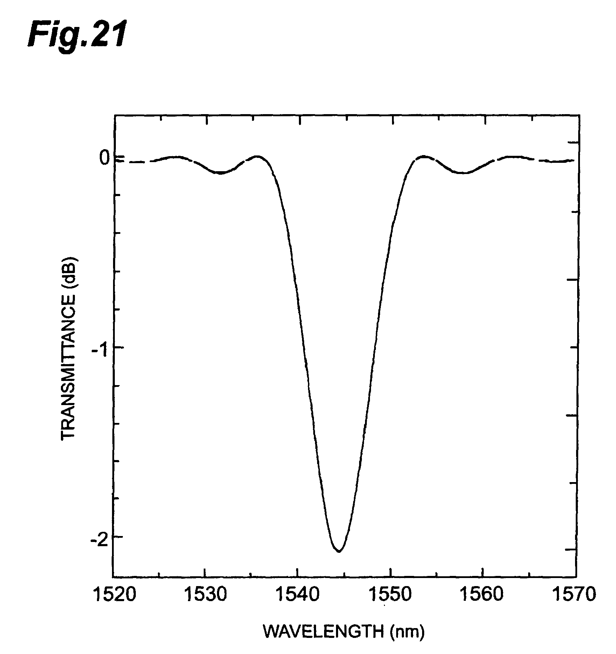

Normally, EDFA of 1.55 μm band has a sharp gain peak near 1530 nm and two broad peaks between 1540 and 1560, as shown in Fig. 20. Consequently as one method of configuring a gain equalizer having a long-period grating with a transmission characteristic like that shown in Fig. 21, a so-called phase-shifting long-period grating (reference 1: Electron. Lett., Vol. 34, No. 11, p. 1132, 1998; reference 2: IEICE Tech. Rep., OPE98-111, p. 13, 1998), which brings the transmission characteristics closer to the EDFA loss profile by changing the phase difference between the core and cladding modes between two gratings, may be used.

DISCLOSURE OF THE INVENTION

As a result of studies of the above-described conventional technology, the inventors discovered the following problem. In the preceding technology described in Reference 1, although gain flattening is achieved over the broad range of a wavelength band of 30 nm, the gain deviation is a large 2 dB, and characteristics could not be called adequate. On the other hand, in the preceding technology described in Reference 2, gain flattening is achieved, with a gain deviation of 0.2 dB; but because gain peaks near 1530 nm are outside the used band, the band is narrow at 24 nm. Also, when the preceding technology described in Reference 2 is used as a method of manufacturing such a phase-shifting long-period grating, a condensing lens. and stage are employed to make the refractive index fluctuation one period at a time, using a method of shifting the amount of movement of the stage midway; this method requires highly precise stage control, and it is difficult to easily and precisely obtain the desired transmission characteristics.

Hence an object of this invention is to provide a method of manufacturing an optical loss filter by means of which prescribed transmission characteristics can be obtained easily and with good precision, and which can be manufactured in compact form, as well as an optical loss filter manufactured by this method.

A method of manufacturing an optical loss filter of this invention is a method of manufacturing an optical loss filter in an optical waveguide having a core with a prescribed refractive index, and comprises a first process in which first and second long-period gratings are formed, with a prescribed interval provided between, in the axial direction of a core having the photosensitivity of the optical waveguide, and a second process in which the core between the first long-period grating and second long-period grating is irradiated with ultraviolet light.

In this method of manufacturing an optical loss filter, by forming the first and second long-period gratings in the first process, an initial transmission characteristic is obtained through the combination of the first and second long-period gratings. And by irradiating the core with ultraviolet light in the second process, this initial transmission characteristic is modified. Because the amount of irradiation of the core with ultraviolet light can be changed continuously, by adjusting the irradiation amount, the desired transmission characteristic can be obtained easily and with good precision. Also, the number of long-period gratings formed can be reduced, so that manufacturing in compact form is possible.

In a method of manufacturing an optical loss filter of this invention, prior to the first process and the second process, or after both these processes, a third process, in which one or more third long-period gratings are formed, can also be comprised. By this means, further diversification of the transmission characteristic of the optical loss filter can be achieved.

A method of manufacturing an optical loss filter of this invention is a method of manufacturing an optical loss filter in an optical waveguide having a core with a prescribed refractive index, comprising a first process, in which a first long-period grating, By this means, further diversification of the transmission characteristic of the optical loss filter can be achieved.

In a method of manufacturing an optical loss filter of this invention, it is preferable that in a second process, light in a prescribed usage wavelength band is input from one end of the optical waveguide, while light emitted from the other end of the optical waveguide is received, and the transmission characteristic of the optical loss filter obtained based on the received light is monitored while performing irradiation with ultraviolet light. By this means, the prescribed transmission characteristic can be obtained easily and with still better precision.

By means of the above method of manufacturing an optical loss filter, the optical loss filter of this invention can be manufactured.

The optical loss filter of this invention is an optical loss filter formed in an optical waveguide having a core with a prescribed refractive index, and used within a prescribed usage wavelength band. The optical loss filter comprises a first long-period grating, having a refractive index fluctuation width provided in the core as the first fluctuation width, a refractive index fluctuation period as the first period, and having the wavelength at which a maximum value of the attenuation due to coupling of the core mode with a cladding mode is obtained as the first wavelength; a second long-period grating, provided in the core at a prescribed distance from the first long-period grating, having a refractive index fluctuation width as the second fluctuation width, a refractive index fluctuation period as the second period, and having the wavelength at which a maximum value of the attenuation due to coupling of the core mode with a cladding mode is obtained as the second wavelength; and, a phase-shifting member, formed by irradiating the core between the first and second long-period gratings with ultraviolet light, after formation of the first and second long-period gratings, and which causes a change in the amount of phase rotation of the core mode.

In this optical loss filter, the prescribed transmission characteristics are obtained easily and with good precision. Further, the number of long-period gratings formed can be reduced, so that manufacturing in compact form is possible.

The optical loss filter of this invention has the relation

$$0 < \Delta N \le \lambda / \Delta L$$

where $\lambda$ is an arbitrary wavelength within a prescribed usage wavelength band, $\Delta L$ is the length of the optical waveguide in which the phase-shifting member is formed, and $\Delta N$ is the amount of change before and after the change in the refractive index of the core of the optical waveguide.

In the optical loss filter of this invention, the first period and second period, and the first fluctuation width and second fluctuation width, are respectively equal. Or, the first period and the second period are equal, but the first fluctuation width and the second fluctuation width are different. Or, the first fluctuation width and second fluctuation width are equal, but the first period and second period are different. Or, the first fluctuation width and second fluctuation width, and the first period and second period, respectively are different.

In the optical loss filter of this invention, it is preferable that the order of the core mode and the coupled cladding mode in the prescribed usage wavelength band coincide in each of the first and second long-period gratings. If the order of the core mode and of the coupled cladding mode coincide, the transmission characteristics of the individual long-period gratings change according to differences in the phase rotation amounts of the core mode and cladding mode between them, so that more diverse characteristics can be obtained.

In the optical loss filter of this invention, it is preferable that one or more third long-period gratings be comprised in the optical waveguide, and that the refractive index fluctuation width of this third long-period grating be different from the refractive index fluctuation width of the first and second long-period gratings. It is also preferable that the refractive index fluctuation period of the third long-period grating be different from the refractive index fluctuation period of the first and second long-period gratings. By this means, further diversification of the transmission characteristics of the optical loss filter is possible.

In the optical loss filter of this invention, it is preferable that the third long-period grating be such that the order of the cladding mode coupling with the core mode within the prescribed usage wavelength band be different from that of the cladding mode coupling with the core mode in the first and second long-period gratings. By this means, the transmission characteristic of the optical loss filter is expressed as the sum, in decibel units, of the transmission characteristic obtained by the combination of the first and second long-period gratings, and the transmission characteristic of the third long-period grating, so that a prescribed characteristic can be easily synthesized.

The present invention can be fully understood through the following detailed explanation and the attached drawings. These are merely examples, and should not be regarded as limiting the scope of the invention.

BRIEF DESCRIPTION OF THE DRAWINGS

Fig. 1A is a figure which explains the configuration of an optical loss filter comprising two long-period gratings (in the case in which the orders of the core mode and the coupled cladding mode in each of the long-period gratings coincide);

Fig. 1B is a figure which explains the changes in the complex amplitude of the core mode and cladding mode in each of the long-period gratings shown in Fig. 1A;

Fig. 2 is a graph showing the transmission characteristic of the optical loss filter shown in Fig. 1A and Fig. 1B;

Fig. 3A is a figure which explains the configuration of an optical loss filter comprising two long-period gratings (in the case in which the orders of the core mode and the coupled cladding mode in each of the long-period gratings differ);

Fig. 3B is a figure which explains the changes in the complex amplitude of the core mode and cladding mode in each of the long-period gratings shown in Fig. 3A;

Fig. 4 is a graph showing the transmission characteristic of the optical loss filter shown in Fig. 3;

Fig. 5A is an explanatory figure which explains a method of manufacturing an optical loss filter;

Fig. 5B is a figure showing the refractive index profile of a manufactured optical loss filter;

Fig. 6A and Fig. 6B are figures which explain the method of manufacturing an optical loss filter in a first embodiment of this invention;

Fig. 7 is a graph showing the transmission characteristics of the optical loss filter of the first embodiment;

Fig. 8A, Fig. 8B, and Fig. 8C are figures showing examples of the configuration of an optical loss filter of the first embodiment;

Fig. 9 is a graph showing the transmission characteristics corresponding to each of the optical loss filters shown in Fig. 8A, Fig. 8B, and Fig. 8C;

Fig. 10A and Fig. 10B are figures which explain the method of manufacturing an optical loss filter in a second embodiment of this invention;

Fig. 11 is a graph showing the transmission characteristics of an optical loss filter of the second embodiment;

Fig. 12 is a figure showing the configuration of an optical loss filter of the second embodiment;

Fig. 13 is a graph showing the transmission characteristics of the optical loss filter shown in Fig. 12;

Fig. 14 is a figure showing the configuration of a long-period grating comprised by the optical loss filter in a third embodiment;

Fig. 15 is a graph showing the transmission characteristic of the long-period grating shown in Fig. 14;

Fig. 16 is a graph showing the configuration of an optical loss filter of the third embodiment of this invention;

Fig. 17 is a graph showing the transmission characteristic of the optical loss filter shown in Fig. 16;

Fig. 18 is a graph showing the gain characteristic when an optical loss filter of this invention is applied as a gain equalizer of EDFA;

Fig. 19 is a figure showing the configuration of another optical loss filter of the third embodiment of this invention;

Fig. 20 is a graph showing a gain characteristic of EDFA; and,

Fig. 21 is a graph showing one example of the transmission characteristic of a long-period grating.

## BEST MODE FOR CARRYING OUT THE INVENTION

Below, preferred embodiments of the method of manufacturing an optical loss filter of this invention, and of an optical loss filter of this invention, are explained in detail, referring to the attached drawings. Elements which are the same in the drawings are assigned the same symbols, and redundant explanations are omitted.

Prior to explaining the method of manufacturing an optical loss filter and the optical loss filter of this invention, the transmission characteristic of an optical loss filter comprising two long-period gratings is explained.

The transmission characteristic of a long-period grating is determined by solving the following mode-coupling equation.

$$dA \, / \, dz + j\chi_{core} \, A + j\kappa^m B^m \cdot \exp(2j\delta^m z) = 0 \qquad (2)$$

$$dB^m \, / \, dz + j\chi^m_{clad} B^m + j\kappa^m A \cdot \exp(-2j\delta^m z) = 0 \qquad (3)$$

Here A is the core mode complex amplitude, $B^m$ is the mth cladding mode complex amplitude, and j indicates the imaginary unit. $\chi_{core}$ is the change in propagation constant of the core mode due to rising refractive index, $\chi^m_{clad}$ is the change in propagation constant of the mth cladding mode due to rising refractive index, and $\kappa^m$ is the coupling constant between the core mode and the mth cladding mode.

If $\Lambda$ is the grating period, $\beta_{core}$ is the core mode propagation constant, and $\beta^m_{clad}$ is the mth cladding mode propagation constant, then $\delta^m$ is expressed by

$$\delta^m = (\beta_{core} - \beta^m_{clad}) \, / \, 2 \qquad (4)$$

and is a parameter determined by the refractive index profile of the optical waveguide, for example, an optical fiber.

When the above differential equations (2) and (3) are solved for certain initial conditions, the transmission characteristic of the core mode resulting from the grating is given by $|A(L)/A(0)|^2$ (where L is the grating length). The solution of these equations can be expressed as a matrix:

$$\begin{bmatrix} A(L) \\ B^m(L) \end{bmatrix} = M^m \begin{bmatrix} A(0) \\ B^m(0) \end{bmatrix} \qquad (5)$$

Here $M^m$ is a matrix representing the coupling of the core mode and the mth cladding mode.

When one such long-period grating is formed in the optical waveguide, the initial condition for the cladding mode can be written $B^m(0) = 0$ (the core mode initial condition is $A(0)$), so that $|A(L)/A(0)|^2$ can be written using a simple equation, and by modifying the length of the long-period grating, the period, and the amplitude of the refractive index change, the loss wavelength, loss amount, and half-width can be adjusted to prescribed values.

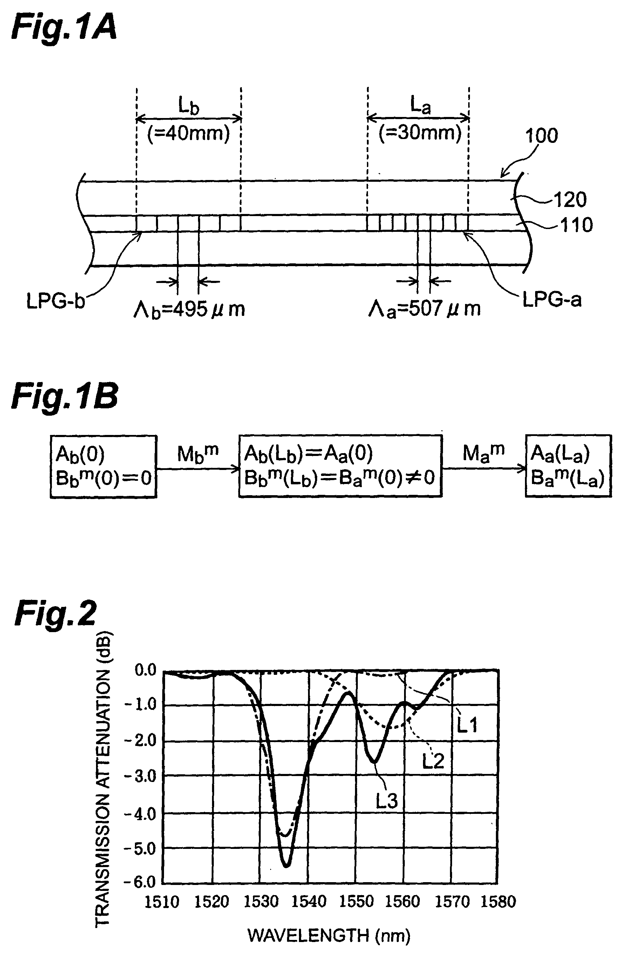

Fig. 1A is a figure showing in summary the construction of an optical loss filter provided with two long-period gratings. In this figure, the optical loss filter 100 is an optical fiber serving as an optical waveguide and comprising a core 110 doped with $GeO_2$, and cladding 120 provided on the periphery of the core 110. The two long-period gratings formed in the core 110 have cladding modes, coupled with the core mode, the orders of which coincide.

Specifically, in the optical fiber 100 of Fig. 1A are provided two long-period gratings LPG-a, LPG-b, in which the cladding mode orders (mth order) coupled with the core mode in the longitudinal direction coincide. The long-period grating LPG-a has a refractive index fluctuation period (grating period) $\Lambda_a$ of 507 μm, a grating length $L_a$ of 30 mm, and a propagation matrix $M_a^m$. The long-period grating LPG-b has a refractive index fluctuation period $\Lambda_b$ of 495 μm, grating length $L_b$ of 40 mm, and propagation matrix $M_b^m$. Fig. 2 is a graph showing the transmission characteristics of the optical loss filter 100 shown in Fig. 1A.

In Fig. 1A, the complex amplitude of the core mode with initial value $A_b(0)$ (the initial value $B_a^m(0)$ of the mth cladding mode is zero) in the first-stage long-period grating LPG-b is $A_b(L_b)$, and the complex amplitude of the mth cladding mode is $B_b^m(L_b)$. $A_b(L_b)$ is the initial value of the core mode in the second-stage grating LPG-a, while $B_b^m(L_b)$ is equal to the initial value $B_a^m(0)$ of the mth cladding mode in the second-stage long-period grating LPG-a. $B_a^m(0)$ is not zero, so that ultimately the mth cladding mode differs from the mth cladding mode independently coupled in the first-stage long-period grating LPG-a (see Fig. 1B). In other words, the transmission characteristics of each of the long-period gratings LPG-a and LPG-b differ from the respective transmission characteristics for the case in which each exists independently.

In this way, when there is an interdependence between the first-stage grating LPG-b and the second-stage grating LPG-a, the transmission characteristic L3 for the optical loss filter 100 as a whole cannot be represented as the sum in decibel units of the transmission characteristics L1, L2 when the initial value of the mth cladding modes in each of the long-period gratings LPG-a, LPG-b is zero, as shown in Fig. 2. In other words, even if long-period gratings are combined which cause mode coupling in a prescribed band between the same-order (mth order) clade mode and core mode, the transmission characteristic is not the sum of the individual transmission characteristics of each long-period grating; instead, a transmission characteristic with numerous changes is obtained.

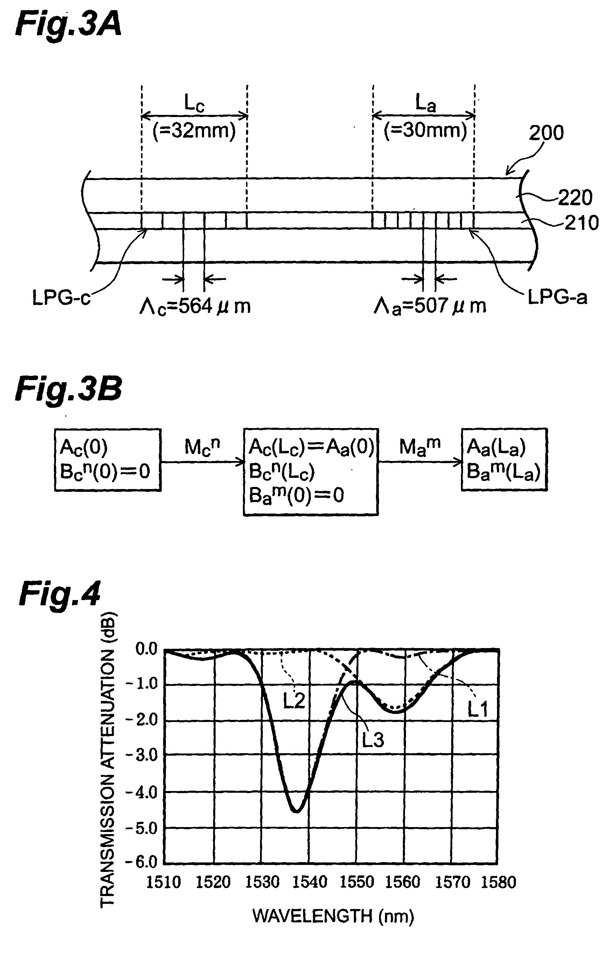

Fig. 3A is a figure showing in summary the construction of another optical loss filter in which two long-period gratings are provided. In this figure, the optical loss filter 200 is an optical fiber serving as an optical waveguide and comprising a core 210 doped with $GeO_2$, and a cladding 220 provided on the periphery of the core 110. The two long-period gratings formed within the core 210 have cladding modes of different orders coupled with the core mode.

Specifically, in the optical fiber 200 of Fig. 3A, two long-period gratings LPG-a, LPG-c are provided, with different cladding mode orders coupled with the core mode in the longitudinal direction. Similarly to the second-stage long-period grating in Fig. 1A, the long-period grating LPG-a has a refractive index fluctuation period (grating period) $\Lambda_a$ of 507 μm and a grating length $L_a$ of 30 mm; the propagation matrix is $M_a^m$. On the other hand, the long-period grating LPG-c has a refractive index fluctuation period $\Lambda_c$ of 564 μm and a grating length $L_c$ of 32 mm; the propagation matrix is $M_c^n$. Fig. 4 is a graph showing the transmission characteristic of the optical loss filter 200 shown in Fig. 3A.

In the long-period gratings LPG-a and LPG-c of this optical loss filter 200, the orders of the cladding modes which can couple with the propagation mode in the core in the wavelength band shown in Fig. 4 are different (the nth and mth orders). Under this condition, an nth cladding mode $B_c^n(L_c)$ occurs in the first-stage long-period grating LPG-c (the complex amplitude of the core mode with initial value $A_c(0)$ is $A_c(L_c)$)/ but almost no coupling of this cladding mode occurs in the second-stage grating LPG-a, and so there is no effect on the characteristics of LPG-a. Hence the initial value of the core mode for the second-stage grating LPG-a can be set to, and the initial value of the mth cladding mode $B_a^m$ can be set equal to zero. Hence the complex amplitude finally obtained for the core mode, and the complex amplitude for the mth cladding mode, are equal in the case in which the second-stage long-period grating LPG-a exists independently (see Fig. 3B).

That is, by having the order of the cladding mode which can couple with the propagation mode in the core within the prescribed band be different for the two long-period gratings, the transmission characteristic L3 for the entire optical loss filter 200 can be expressed as the sum in decibel units of the transmission characteristics L1, L2 of the two long-period gratings LPG-a, LPG-c, as shown in Fig. 4.

Hence it is required that the long-period gratings employed in the optical loss filter of this embodiment have two or more period structures with different refractive index periods, in order that cladding modes with different orders in the prescribed wavelength band and core modes are coupled. They are formed such that transmission characteristics of each of the long-period gratings are in a relation of addition or subtraction (in the case of decibel units) with the overall transmission characteristics. Next, a prescribed method is used to adjust the loss wavelength and the amount of attenuation at that wavelength for each of the long-period gratings, and by combining the adjusted long-period gratings, it is possible to manufacture an optical loss filter with the desired transmission characteristic. Conversely, the transmission characteristics of the optical loss filter to be manufactured can be set at first, and a plurality of long-period gratings equivalent to this transmission characteristic can be combined to obtain the desired optical loss filter.

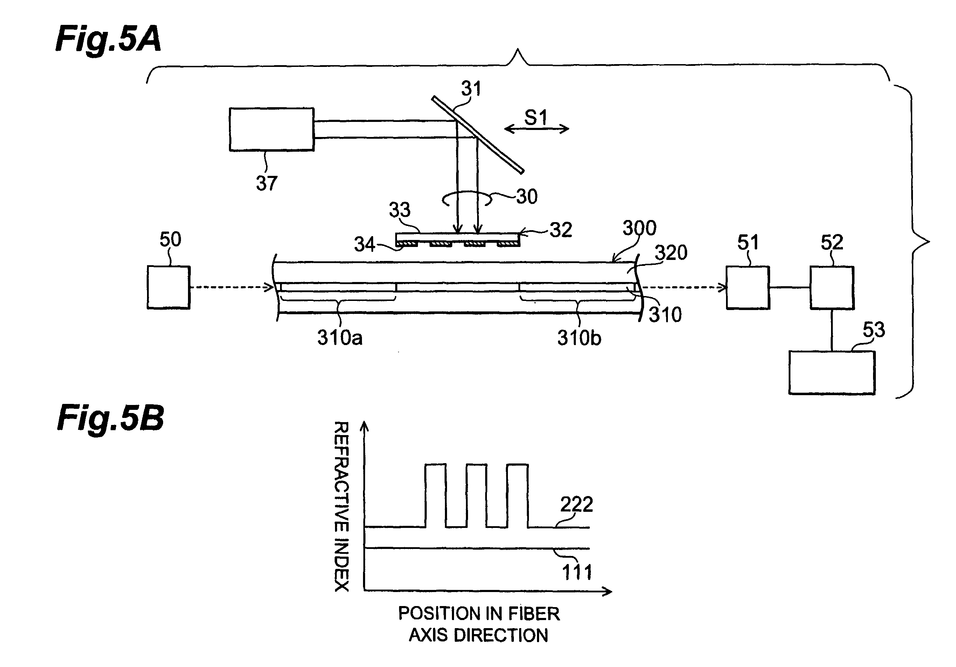

Next, a method of manufacturing an optical loss filter with the above construction is explained. Fig. 5A is a figure illustrating a method of manufacturing a long-period grating comprised by an optical loss filter; Fig. 5B is a graph showing the refractive index profile of each filter region (regions in which long-period gratings are formed) in an optical loss filter manufactured by the method of Fig. 5A.

In order to obtain an optical loss filter, an optical fiber 300 is prepared as an optical waveguide, comprising a core 310 doped with $GeO_2$, and cladding 320 provided on the periphery of the core 310. In Fig. 5A, an intensity modulating mask 32 is provided on the optical fiber 300 to modulate the intensity of ultraviolet light in the longitudinal direction of the optical fiber 300. This intensity modulating mask 32 comprises a silica glass plate 33, and a pattern 34, provided at prescribed intervals on the silica glass plate 33, to block ultraviolet light. Also, an ultraviolet ray reflecting mirror 31 is arranged so as to guide ultraviolet light 30 emitted from the light source 37 to the intensity modulating mask 32, so as to sandwich the intensity modulating mask 32 together with the optical fiber 300. This ultraviolet ray reflecting mirror 31 can be moved along the core 310 of the optical fiber 300 (along the direction indicated by the arrow S1 in the figure).

A light source 50 of semiconductor laser which emits measurement light in the usage wavelength band is connected to one end of the optical fiber 300; at the other end of the optical fiber 300 are arranged an optical spectrum analyzer 51 which detects the wavelength and the power at that wavelength of measurement light which has passed through the prescribed region, data processing means 52 having a memory to store electrical signal data from the optical spectrum analyzer 51 and a CPU to perform prescribed computation processing, and an image display device 53 to display electrical signal data from the data processing means 52.

The optical fiber 300 employs silica glass as the main component; the core 310 comprises germanium, which raises the refractive index. This germanium is known as a material which is sensitive to ultraviolet light at wavelengths near 248 μm or 193 μm. That is, silica glass comprising germanium has the property by which, when irradiated with ultraviolet light at the above wavelengths, the refractive index rises in the irradiated portions. For this reason, the light from an excimer laser in the 248 μm wavelength band is used as the ultraviolet light 30 for irradiation of the optical fiber 300. In order to improve the efficiency of the refractive index increase due to ultraviolet irradiation, the optical fiber 300 is doped with hydrogen at 100 atmospheres.

The intensity modulating mask 32 has a plurality of stripe-shaped chromium layers 34, evaporation-deposited at equal intervals onto the surface of the transparent silica glass plate 33. This chromium layer 34 blocks the ultraviolet beam 30. Hence on the chromium evaporation-deposited surface of the silica glass plate 33, light-blocking portions (that is, chromium layers) and light-transmitting portions (the glass surface positioned between chromium layers) are arranged in an alternating grid. Consequently, the ultraviolet light which has passed through the intensity modulating mask 32 is incident in grid shape at equal intervals on the optical fiber 300. This irradiated light is incident on the core 310 comprising germanium, a photosensitive material, and induces a refractive index change in the core 310. By this means, a plurality of sites the refractive index of which has risen locally are arranged in the core 310 of the optical fiber 300 at equal intervals. By thus inducing a periodic rise in the refractive index of the core 310, a long-period grating is formed having the desired transmission characteristic in the desired region (the grating formation region) of the core 310.

In this optical loss filter, a first long-period grating is formed in the core 310 by irradiating the region for grating formation 310a which is to become the filter region with an ultraviolet beam through an intensity modulating mask 32, as shown in Fig. 5A. Fig. 5B shows the refractive index profile 222 of the first long-period grating formed in this way. In Fig. 5B, the refractive index profile 111 of the cladding 320 in the region of formation of the first long-period grating is also shown.

Next, the position of the ultraviolet ray reflecting mirror 31 is shifted, and the grating formation region 310b, at a prescribed distance from the grating formation region 310a, is irradiated with an ultraviolet beam to form the second long-period grating in the core 310.

When forming the first and second long-period gratings, measurement light from the light source 50 is input from one end of the optical fiber 300, and the measurement light emitted from the other end of the optical fiber 300 is received by an optical spectrum analyzer 51. It is preferable that electrical signal data from the spectrum analyzer 51 be processed by the data processing means 52, and that electrical signal data from the data processing means 52 be displayed on an image display device 53, to monitor the transmission characteristic of the optical loss filter.

First Embodiment

First, a method of manufacturing an optical loss filter of the first embodiment, and the optical loss filter manufactured by this method, are explained. In the method of manufacturing an optical loss filter of this embodiment, a method similar to that described above is used to form two long-period gratings, and then the interval between these two long-period gratings is irradiated with ultraviolet light to form a phase-shifting member.

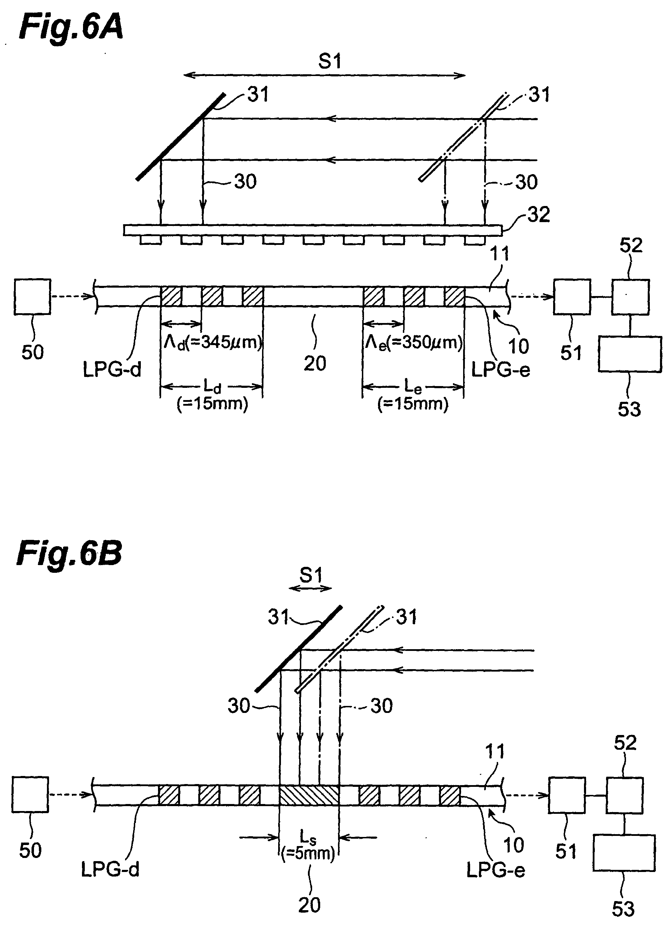

Fig. 6A is a figure showing a method of manufacturing two long-period gratings; Fig. 6B is a figure showing a method of irradiating the interval between the long-period gratings with ultraviolet light. In Fig. 6A and Fig. 6B, only the core 11 of the optical fiber 10 comprised by the optical loss filter is shown, without the cladding, in order to avoid complexity in the drawing; but similarly to the optical fiber 300 shown in Fig. 5A, the optical fiber has a structure comprising a core doped with $GeO_2$, and cladding provided on the core periphery. In the following drawings also, the cladding is similarly omitted in order to avoid complexity in the drawings.

First, as shown in Fig. 6A, by irradiating the optical fiber 10 with an ultraviolet beam 30 through an intensity modulating mask 32 while scanning a reflecting mirror 31, two long-period gratings LPG-d, LPG-e are formed, with an intervening interval 20 of 5 mm, in the core 11 of the optical fiber 10 (first process). The long-period grating LPG-d has a grating length Ld of 15 mm and refractive index fluctuation period $\Lambda_d$ of 345 μm. The long-period grating LPG-e has a grating length Le of 15 mm, and a refractive index fluctuation period $\Lambda_e$ of 350 μm. At this time, measurement light from a light source 50 is input from one end of the optical fiber 10, and the measurement light emitted from the other end of the optical fiber 10 is received by an optical spectrum analyzer 51. It is preferable that electrical signal data from the spectrum analyzer 51 be processed by data processing means 52, and electrical signal data from the data processing means 52 be displayed on an image display device 53, to monitor the transmission characteristic at this stage.

Next, as shown in Fig. 6B, after removing the intensity modulating mask 32, the reflecting mirror 31 is scanned, the optical fiber 10 in the interval portion 20 between the long-period grating LPG-d and the long-period grating LPG-e is irradiated with ultraviolet light, and the refractive index of this portion is raised (second process). Here the order of the cladding mode contributing to coupling with the core mode is made to coincide with the order of the core mode within the same wavelength band. Through this, the desired transmission characteristic can be easily obtained.

When irradiating the interval portion 20 with ultraviolet light, measurement light from the light source 50 is input from one end of the optical fiber 10, and the measurement light emitted from the other end of the optical fiber 10 is received by the optical spectrum analyzer 51. It is preferable that electrical signal data from the spectrum analyzer 51 be processed by the data processing means 52, and electrical signal data from the data processing means 52 be displayed on the image display device 53, to monitor the transmission characteristic of the optical loss filter. When the optical loss filter transmission characteristic displayed on the image display device 53 substantially coincides with the desired characteristic, irradiation of the interval portion 20 with ultraviolet light is halted. By this means, an optical loss filter having the desired transmission characteristic can be manufactured easily and with good precision.

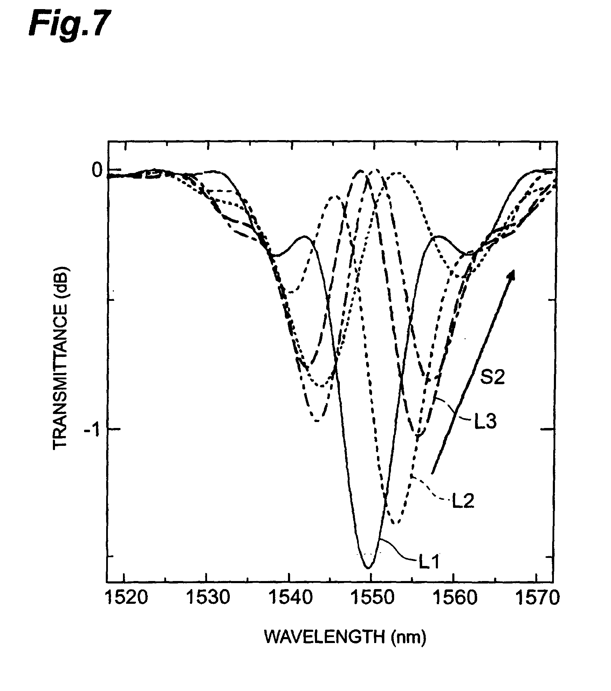

Fig. 7 is a graph showing the transmission characteristic of an optical loss filter obtained by the above method. When the interval portion 20 of the optical fiber 10 between the two long-period gratings LPG-d and LPG-e is irradiated with ultraviolet light, the refractive index of the core of the optical fiber 10 increases, so that the phase velocity of the core mode propagating in this portion changes, and the effective optical path length between the two gratings changes. Hence the wavelength of maximum attenuation changes with the amount of ultraviolet irradiation, as indicated by the solid line L1, dotted line L2 and dashed line L3, and various transmission characteristics can be obtained. The arrow S2 in Fig. 7 indicates the direction of increasing ultraviolet irradiation amount.

In such a phase-shifting long-period grating in which the core mode phase is shifted in the interval 20 between two long-period gratings, the difference in the amount of phase rotation between the core and cladding modes in this interval portion 20 results in the same transmission characteristic for every change by $2\pi$, so that the desired characteristic can be obtained for a value of the quantity (difference in phase rotation after ultraviolet irradiation) - (difference in phase rotation before ultraviolet irradiation) between 0 and $2\pi$. That is, the relation

$$0 < (\beta_{core}'\Delta L - \beta_{cladding}'\Delta L) - (\beta_{core}\Delta L - \beta_{cladding}\Delta L) \leq 2\pi \qquad (6)$$

should be satisfied. Here $\Delta L$ is the distance between the two long-period gratings, $\beta_{core}$ and $\beta_{cladding}$ are respectively the propagation constants at the usage wavelength $\lambda$ of the core mode and cladding mode before irradiation with ultraviolet light, and $\beta_{core}'$ and $\beta_{cladding}'$ are respectively the propagation constants at the usage wavelength $\lambda$ of the core mode and cladding mode after irradiation with ultraviolet light. Further, by using

$$\beta_{cladding}' \fallingdotseq \beta_{cladding} \qquad (7)$$

$$\beta_{core}' \fallingdotseq (2\pi/\lambda)n_{core} \qquad (8)$$

the following relation is obtained.

$$0 < (n_{core}' - n_{core}) \leq \lambda/\Delta L \qquad (9)$$

Here $n_{core}$ is the core refractive index before ultraviolet irradiation, and $n_{core}'$ is the core refractive index after ultraviolet irradiation.

As explained above, by irradiating the interval portion 20 of the optical fiber with ultraviolet light, the core refractive index changes, and the amount of phase rotation of the core mode changes; hence this is called a "phase-shifting member".

Next, an example of the configuration of another optical loss filter, formed by the same method as that described above, is explained. First, the reflecting mirror 31 shown in Fig. 6A is scanned, and two types of long-period grating are formed at a prescribed interval in the core 11 of the optical fiber 10, through the intensity modulating mask 32. Then, as shown in Fig. 6B, after the intensity modulating mask 32 is removed, the interval portion 20 of the optical fiber 10 is uniformly irradiated with ultraviolet light, to produce the optical loss filter.

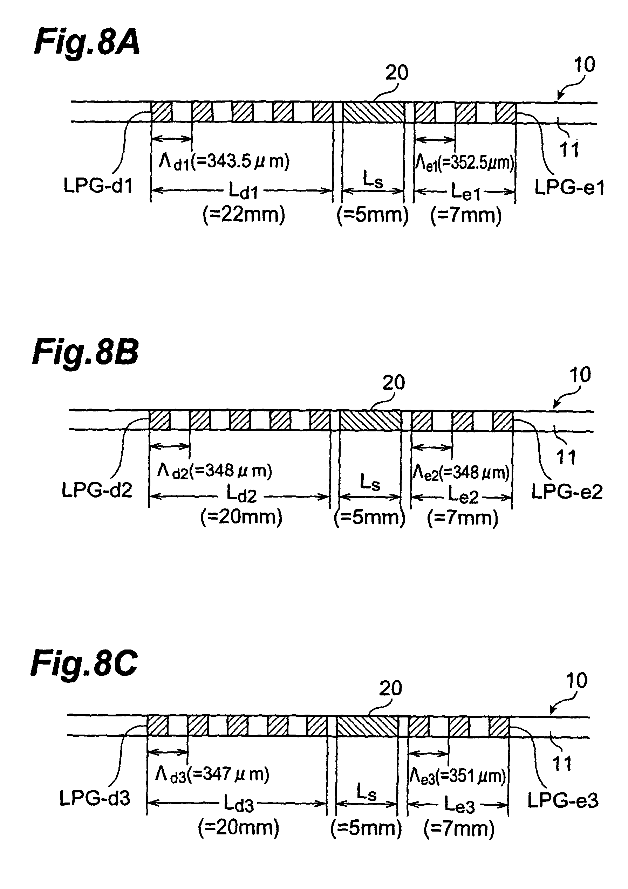

Figs. 8A to 8C are figures showing examples of the configuration of optical loss filters obtained in this way. In the optical loss filter shown in Fig. 8A, a long-period grating LPG-d$_1$ with a grating length Ld1 of 22 mm and refractive index fluctuation period $\Lambda_{d1}$ of 343.5 µm, and a long-period grading LPG-e$_1$ with a grating length Le1 of 7 mm and refractive index fluctuation period $\Lambda_{e1}$ of 352.5 µm are provided in the axial direction of the optical fiber 10, separated by an interval Ls of 5 mm. This interval portion 20 is irradiated with ultraviolet light to provide a phase-shifting member. The refractive index fluctuation widths of the long-period gratings LPG-d$_1$ and LAG-e$_1$ are equal.

In the optical loss filter shown in Fig. 8B, a long-period grating LPG-d$_2$ with a grating length Ld2 of 20 mm and refractive index fluctuation period $\Lambda_{d2}$ of 348 µm, and a long-period grating LPG-e$_2$ with a grating length Le2 of 7 mm and refractive index fluctuation period $\Lambda_{e2}$ of 348 µm, are provided in the axial direction of the optical fiber 10, separated by an interval 20 of 5 mm. This interval portion 20 is irradiated with ultraviolet light to provide a phase-shifting member. The refractive index fluctuation widths of the long-period gratings LPG-d$_2$ and LPG-e$_2$ are different.

In the optical loss filter shown in Fig. 8C, a long-period grating LPG-d with a grating length Ld3 of 20 mm and refractive index fluctuation period $\Lambda_{d3}$ of 347 µm, and a long-period grating LPG-e$_3$ with a grating length Le3 of 7 mm and refractive index fluctuation period $\Lambda_{e3}$ of 351 µm, are provided in the axial direction of the optical fiber 10, separated by an interval 20 of 5 mm. This interval portion 20 is irradiated with ultraviolet light to provide a phase-shifting member. The refractive index fluctuation widths of the long-period gratings LPG-d$_3$ and LPG-e$_3$ are different.

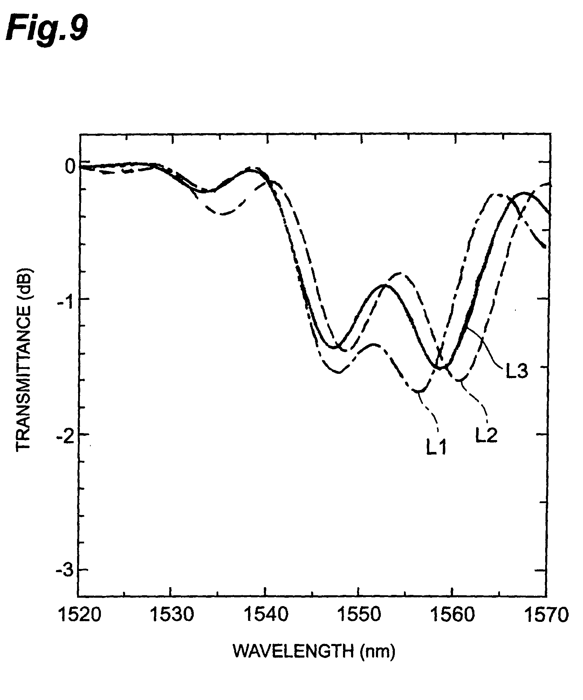

Fig. 9 is a graph showing the transmission characteristics of each of the above optical loss filters. The dashed line L1 is an example of the transmission characteristic of an optical loss filter in which the lengths and the refractive index fluctuation periods of the two long-period gratings are different, and the refractive index fluctuation widths are equal, as shown in Fig. 8A. The dotted line L2 is an example of the transmission characteristic of an optical loss filter in which the lengths and refractive index fluctuation widths of the two long-period gratings are different, and the refractive index fluctuation periods are equal, as shown in Fig. 8B. The solid line L3 is an example of the transmission characteristic of an optical loss filter in which the lengths, refractive index fluctuation widths, and refractive index fluctuation periods of the two long-period gratings are different, as shown in Fig. 8C.

Thus in the method of manufacturing an optical loss filter of this embodiment, by irradiating the interval portion 20 of the optical fiber with ultraviolet light, the refractive index of the core 11 can be changed substantially continuously, so that an optical loss filter having a highly precise transmission characteristic can be easily obtained. Because the number of gratings can be made small, manufacture in compact form is possible.

Second Embodiment

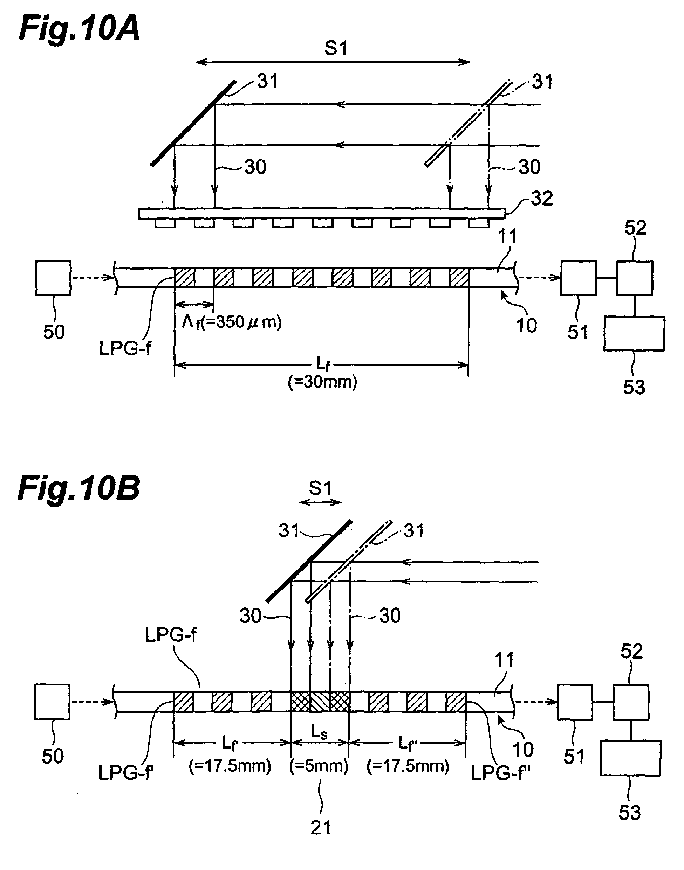

In this embodiment, a method of manufacturing an optical loss filter obtained by irradiating the intermediate portion of a single long-period grating with ultraviolet light, and the optical loss filter manufactured by this method, are explained. Fig. 10A is a figure which shows a method of manufacturing a long-period grating; Fig. 10B is a figure showing a method of irradiating the intermediate portion of the long-period grating with ultraviolet light.

First, as shown in Fig. 10A, the reflecting mirror 31 is scanned, and a long-period grating is formed in the core of the optical fiber 10 through an intensity modulating mask 32 (first process). This long-period grating LPG-f has a grating length Lf of 30 mm and refractive index fluctuation period $\Lambda_f$ of 350 µm. Then, as shown in Fig. 10B, after removing the intensity modulating mask 32, the intermediate part 21 in the center 5 mm of the long-period grating LPG-f, excluding both ends, is irradiated uniformly with ultraviolet light by scanning the reflecting mirror 31 (second process).

When irradiating the intermediate portion 21 with ultraviolet light, measurement light from a light source 50 is input from one end of the optical fiber 10, and the measurement light emitted from the other end of the optical fiber 10 is received by the optical spectrum analyzer 51. It is preferable that electrical signal data from the spectrum analyzer 51 be processed by data processing means 52, and electrical signal data from the data processing means 52 be displayed on an image display device 53, to monitor the transmission characteristic of the optical loss filter. When the transmission characteristic of the optical loss filter displayed on the image display device 53 substantially coincides with the desired characteristic, the irradiation with ultraviolet light of the intermediate portion 21 is halted. By this means, an optical loss filter having the desired transmission characteristic can easily be manufactured with good precision.

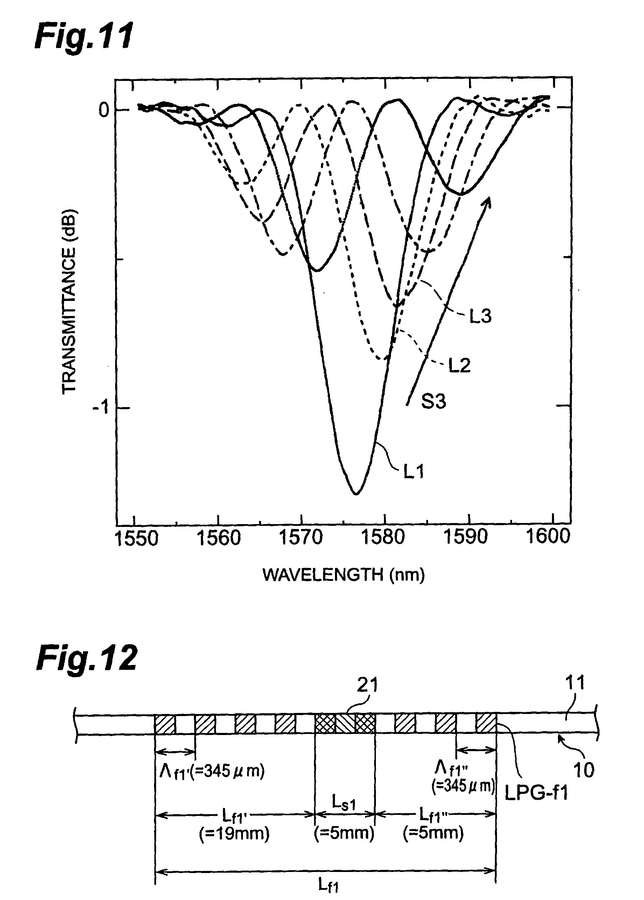

Fig. 11 is a graph showing the transmission characteristics of an optical loss filter obtained by the above method. When the intermediate portion 21 of the long-period grating LPG-f is irradiated with ultraviolet light, the refractive index of the intermediate portion 21 rises, the difference in phase-rotation amounts of core and cladding modes changes, and the effective optical path length of each mode in the refractive index fluctuating portion formed in the front and back of the irradiation position changes, so that the synthesized transmission characteristic has a maximum-attenuation wavelength shifted as shown by the solid line L1, dotted line L2, and dashed line L3 according to the amount of irradiation. The arrow S3 in Fig. 11 indicates the direction of increase of the amount of ultraviolet irradiation.

In such a phase-shifting long-period grating in which the phase in the intermediate portion 21 of one long-period grating is shifted, the transmission characteristic exhibited is substantially the same each time the difference in phase rotation amounts of core and cladding modes in the intermediate portion 21 changes by $2\pi$, so that the desired characteristic can be obtained for a value of the quantity (difference in phase rotation after ultraviolet irradiation) - (difference in phase rotation before ultraviolet irradiation) between 0 and $2\pi$. On the other hand, because the equations (6) through (9) obtain, the relation

$$0 < (n_{mean}' - n_{mean}) \leq \lambda/\Delta L \qquad\qquad (10)$$

is obtained. Here $n_{mean}$ is the mean refractive index of the core of the refractive index fluctuation portion prior to irradiation with ultraviolet light, in a length $\Delta L$ of the intermediate portion 21, and is expressed by $n_{mean} = n_{min} + (n_{max} - n_{min})/2$, where the maximum refractive index and minimum refractive index of the refractive index fluctuation portion are $n_{max}$ and $n_{min}$ respectively. Also, $n_{mean}'$ is the mean refractive index of the core of the refractive index fluctuation portion after irradiation with ultraviolet light in a length $\Delta L$ of the intermediate portion, and is expressed by $n_{mean}' = n_{min}' + (n_{max}' - n_{min}')/2$.

As explained above, the core refractive index changes on irradiation with ultraviolet light in the intermediate portion 21 of a long-period grating, and the amount of core mode phase rotation changes; hence this is called a "phase-shifting member" similarly to the interval portion 20 in the above-described first embodiment.

In the optical loss filter of this embodiment, by irradiating the intermediate portion 21 of one long-period grating LPG-f, formed in advance, with ultraviolet light, a long-period grating LPG-f' and a long-period grating LPG-f" are formed in front of and behind the intermediate portion 21, respectively. In this sense, the configuration is clearly different from that of the optical loss filter of the first embodiment, in which a first long-period grating and a second long-period grating are formed separately, and a phase-shifting member is formed in the interval portion between them. However, from a different point of view, it can be said that after a long-period grating LPG-f is formed which comprises a long-period grating LPG-f' and a long-period grating LPG-f", the portion between the long-period grating LPG-f' and the long-period grating LPG-f" is irradiated with ultraviolet light to form a phase-shifting member. In this sense, the optical loss filter of the first embodiment and the optical loss filter of the second embodiment have similar configurations.

Next, another optical loss filter formed by the method described above is explained. First, the reflecting mirror 31 is scanned, as shown in Fig. 10A, to form a long-period grating the refractive index fluctuation width and refractive index fluctuation period of which are both constant in the core axis direction of the optical fiber 10, by irradiation through an intensity modulating mask 32. Next, after removing the intensity modulating mask 32, the reflecting mirror 31 is scanned to irradiate uniformly with ultraviolet light an intermediate portion 21, within the section in the axial direction of the core in which the long-period grating is formed, and excluding both ends of the section, as shown in Fig. 10B.

Fig. 12 is a figure showing an optical loss filter obtained in this way. This optical loss filter is fabricated by forming a long-period grating LPG-f1 having a grating length Lf1 of 29 mm in the optical axis direction of the optical fiber 10 and a refractive index fluctuation period $\Lambda_{f1}$ of 345 $\mu$m, and then irradiating with ultraviolet light a section from a position at a distance Lf1' of 19 mm from one end toward the other end of LPG-f1, to a position a distance Lsl of 5 mm further toward the other end.

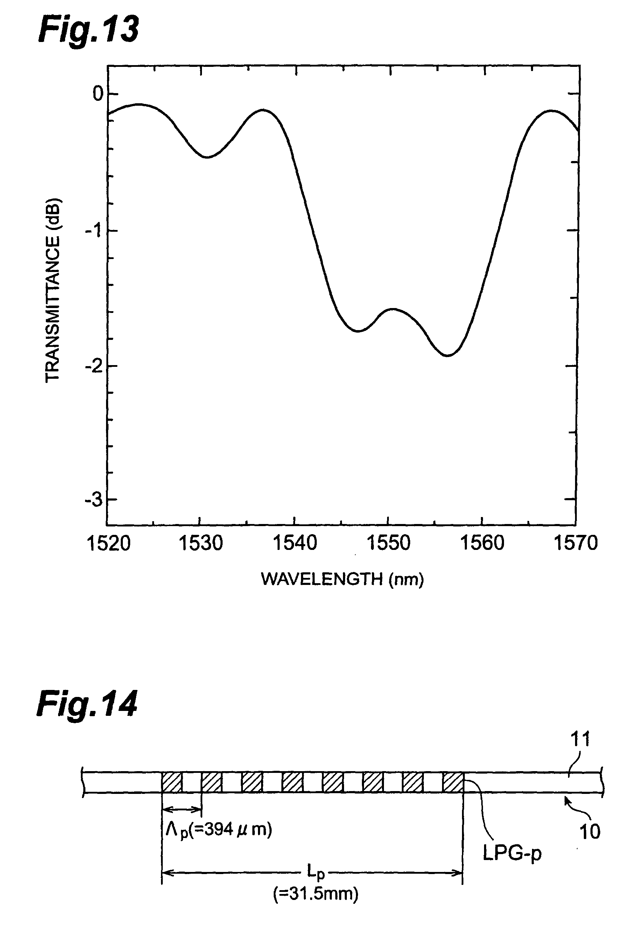

Fig. 13 is a graph showing the transmission characteristic of the optical loss filter shown in Fig. 12. When the intermediate portion 21 of one long-period grating LPG-f1 is irradiated with ultraviolet light, the intermediate portion 21 causes a phase shift with respect to the refractive index fluctuating portion positioned on either side, and a transmission characteristic is obtained having two attenuation maxima which change according to the phase shift.

In this way, when the intermediate portion 21 of a long-period grating is irradiated with ultraviolet light, the core refractive index can be changed substantially continuously by adjusting the amount of ultraviolet irradiation; hence an optical loss filter having the desired transmission characteristic can be obtained easily and with good precision.

Third Embodiment

In this embodiment, a method of manufacturing an optical loss filter which can be formed by combining the optical loss filter formed in the above-described first embodiment or second embodiment with another long-period grating, to obtain a more complex transmission characteristic, as well as an optical loss filter manufactured by this method, are explained.

First, an optical fiber 10 comprising an optical loss filter with the configuration shown in Fig. 12 is prepared. The long-period grating LPG-f comprised by this optical loss filter has a grating length Lf1 of 29 mm and a refractive index fluctuation period $\Lambda_{f1}$ of 345 $\mu$m; a phase-shifting member is formed by irradiating the intermediate portion 21 of the LPG-f1 with ultraviolet light. As shown in Fig. 13, the transmission characteristic of this optical loss filter has two gentle loss peaks in the wavelength range 1540 to 1560 nm.

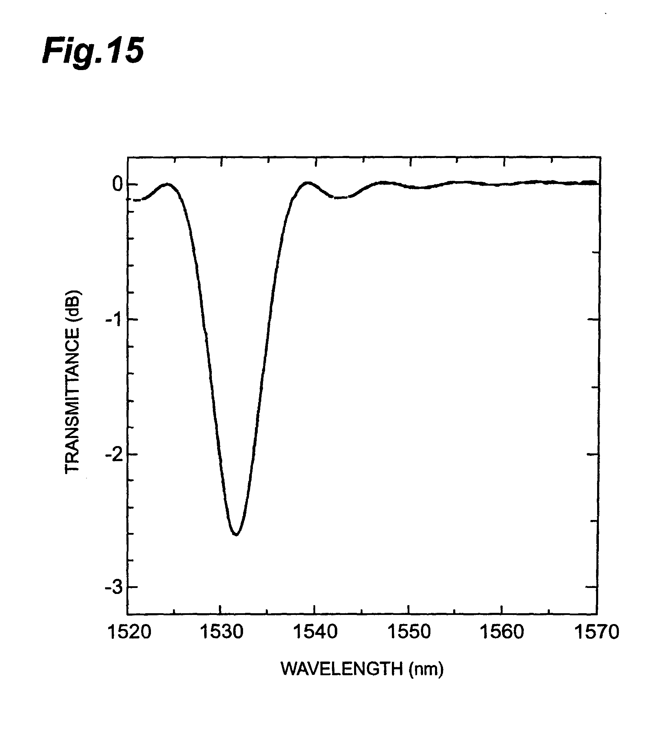

Next, the apparatus shown in Fig. 10A is used to irradiate the optical fiber 10 with an ultraviolet beam 30 through an intensity modulating mask 32, to form a new long-period grating LPG-p. Fig. 14 is a figure showing the configuration of the new long-period grating LPG-p formed in this way. This long-period grating LPG-p has a grating length Lp of 31.5 mm and a refractive index fluctuation period $\Lambda_p$ of 394 $\mu$m. Fig. 15 is a graph showing the transmission characteristic of the long-period grating LPG-p. The loss peak in the transmission characteristic shown in Fig. 15 is formed by the coupling of the core mode and the fifth cladding mode.

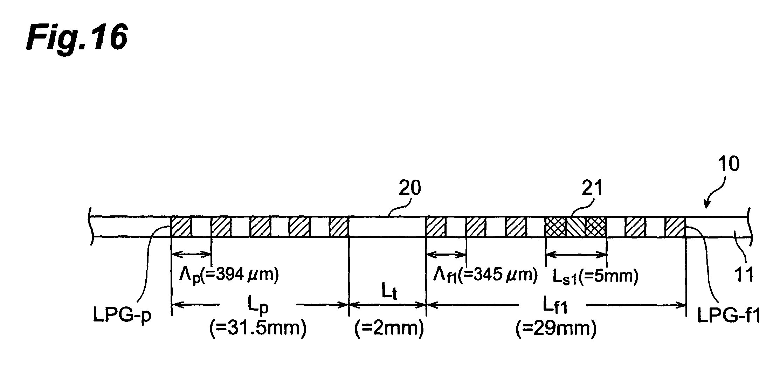

Next, a method of manufacturing an optical loss filter having a new transmission characteristic, formed by combining an optical loss filter with the construction shown in Fig. 12 and a long-period grating LPG-p with the construction shown in Fig. 14, is explained. When combining the two, the LGP-p formed in one optical fiber can simply be connected by fusion to the optical loss filter formed in another optical fiber; but in this embodiment, as shown in Fig. 16, the optical loss filter shown in Fig. 12 and the long-period grating LPG-p shown in Fig. 14 are formed in a single optical fiber 10, with an interval of length Lt equal to 2 mm provided between them.

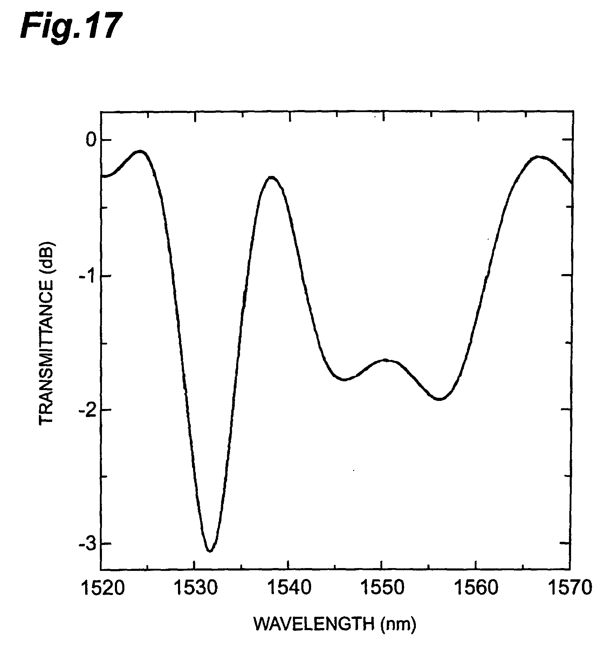

Because the cladding mode orders contributing to coupling with the core mode are different in the same wavelength band in the optical loss filter shown in Fig. 12 and the long-period grating LPG-p shown in Fig. 14, each preserves its transmission characteristic even when the two are brought into proximity. Hence the transmission characteristic when the two are combined is the value resulting from addition of the transmission characteristics shown in Fig. 13 and Fig. 15, as shown in Fig. 17. In this way, in the method of manufacturing an optical loss filter of this embodiment, the optical loss filter shown in Fig. 12 and the long-period grating LPG-p shown in Fig. 14 can be brought into proximity and arranged, so that the optical loss filter can be manufactured in compact form; and because the optical loss filter shown in Fig. 12 and the long-period grating LPG-p shown in Fig. 14 preserve their transmission characteristics, the desired characteristic can easily be obtained with good precision.

The new optical loss filter transmission characteristic shown in Fig. 17 has a sharp loss peak near 1530 nm, and two gentle loss peaks between 1540 and 1560 nm. On the other hand, as shown in Fig. 1, EDFA of 1.55 $\mu$m band has a sharp gain peak near 1530 nm, and two gentle gain peaks between 1540 and 1560 nm.

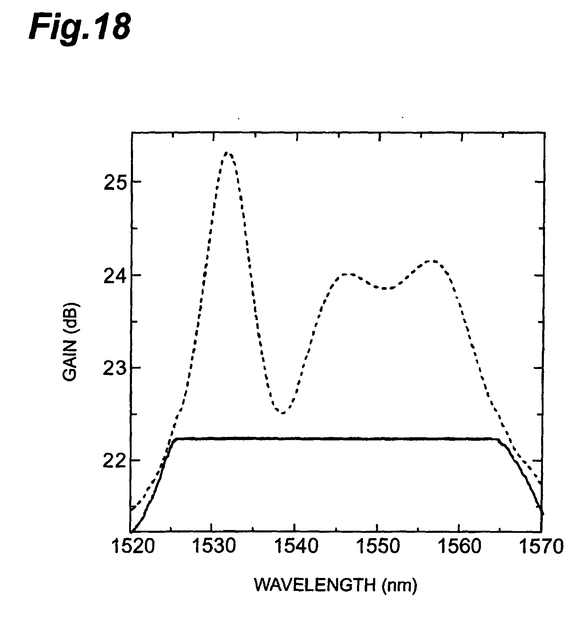

Hence when using an optical loss filter having the transmission characteristic shown in Fig. 17 (with the construction of Fig. 16) as the gain equalizer of an EDFA having the characteristic shown in Fig. 20, the sharp gain peak of the EDFA near 1530 nm is smoothed by the sharp loss peak of the transmission characteristic shown in Fig. 17. Also, the two gentle gain peaks between 1540 and 1560 nm shown in Fig. 20 are smoothed by the two gentle loss peaks in the transmission characteristic of Fig. 17. Fig. 18 shows the gain characteristic of an EDFA when using an optical loss filter with the construction of Fig. 16 as a gain equalizer. As shown in Fig. 18, an extremely flat gain characteristic is obtained over a wavelength band extending for approximately 39 nm.

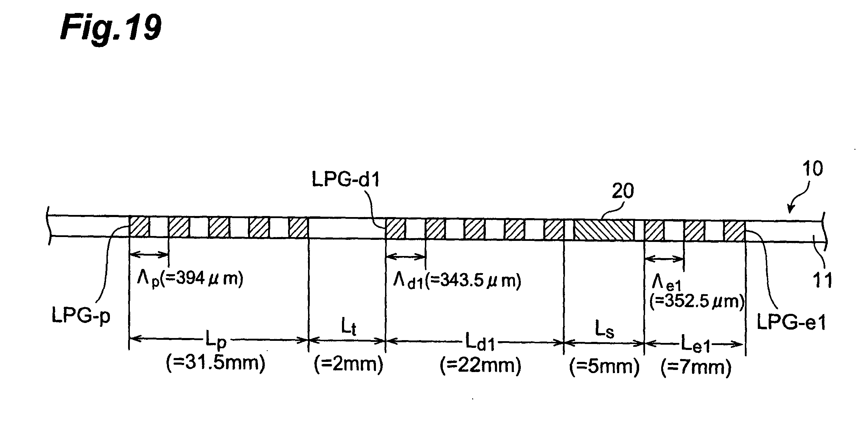

In this embodiment, a case in which a new optical loss filter is configured by combining the optical loss filter of the second embodiment, having the construction shown in Fig. 12, and a long-period grating LPG-p, having the construction shown in Fig. 14, has been explained. In addition to this, a new optical loss filter may for example be configured by combining, as shown in Fig. 19, the optical loss filter of the first embodiment, having the construction shown in Fig. 8A, and a long-period grating LPG-p having the construction shown in Fig. 14.

INDUSTRIAL APPLICABILITY

The method of manufacturing an optical loss filter of this invention has a process for manufacturing a long-period grating, and a process for irradiating the core with ultraviolet light to change the refractive index; because the amount of irradiation of the core with ultraviolet light can be changed continuously, by adjusting this amount of irradiation, a desired transmission characteristic can be obtained easily and with good precision. Also, a small number of long-period gratings can be formed, so that manufacturing in compact form is possible.

Because the optical loss filter is manufactured by the method described above, a desired transmission characteristic can be obtained easily and with good precision. Moreover, because the number of long-period gratings formed is small, [the optical loss filter] is compact.

It is clear from the above explanation of this invention that various modifications to this invention are possible. These modifications should not be regarded as deviating from the concept and scope of this invention, and all improvements which are obvious to persons skilled in the art are included in the following scope of claims.

**Claims**

1. A method of manufacturing an optical loss filter in an optical waveguide having a core with a prescribed refractive index, comprising:

   a first process in which first and second long-period gratings are formed in the axial direction of the core having the photosensitivity of said optical waveguide, providing a prescribed interval therebetween; and,
   a second process in which the core between said first long-period grating and said second long-period grating is irradiated with ultraviolet light.

2. A method of manufacturing an optical loss filter according to Claim 1, further comprising a third process in which, prior to said first and second processes, or after both said processes, one or more third long-period gratings are formed.

3. A method of manufacturing an optical loss filter in an optical waveguide having a core with a prescribed refractive index, comprising:

   a first process in which a first long-period grating, with constant refractive index fluctuation width and refractive index fluctuation period, is formed in the axial direction of the core having the photosensitivity of said optical waveguide; and,
   a second process in which a prescribed region within a section in the axial direction of the core in which said first long-period grating is formed, excluding both ends of the section, is irradiated with ultraviolet light.

4. A method of manufacturing an optical loss filter according to Claim 3, further comprising a third process in which, prior to said first and second processes, or after both said processes, one or more second long-period gratings are formed.

5. A method of manufacturing an optical loss filter according to any of Claims 1 through 4, wherein, in said second process, light in a prescribed usage wavelength band is input from one end of said optical waveguide, while light emitted from the other end of the optical waveguide is received, and the transmission characteristic of the optical loss filter obtained based on the received light is monitored while performing irradiation with ultraviolet light.

6. An optical loss filter manufactured by a method of manufacturing an optical loss filter according to any of Claims 1 through 5.

7. An optical loss filter, formed in an optical waveguide having a core with a prescribed refractive index, and used within a prescribed usage wavelength band, comprising:

   a first long-period grating, provided in said core, the refractive index fluctuation width of which is a first fluctuation width, the refractive index fluctuation period of which is a first period, and having a first wavelength at which the maximum value of attenuation due to coupling of the core mode with a cladding mode is obtained;
   a second long-period grating, provided in said core at a prescribed distance from said first long-period grating, the refractive index fluctuation width of which is a second fluctuation width, the refractive index fluctuation period of which is a second period, and having a second wavelength at which the maximum value of attenuation due to coupling of the core mode with a cladding mode is obtained; and,
   a phase-shifting member, formed by irradiating the core between said first and second long-period gratings with ultraviolet light after formation of the first and second long-period gratings, and which causes a change in the amount of phase rotation of the core mode.

8. The optical loss filter according to Claim 7, having the relation

$$0 < \Delta N \le \lambda/\Delta L$$

where $\lambda$ is an arbitrary wavelength within said prescribed usage wavelength band, $\Delta L$ is the length of the optical waveguide in which said phase-shifting member is formed, and $\Delta N$ is the amount of change before and after the change in the refractive index of the core of said optical waveguide.

9. The optical loss filter according to Claim 7 or Claim 8, wherein said first period and said second period, and said first fluctuation width and said second fluctuation width, are respectively equal.

10. The optical loss filter according to Claim 7 or Claim 8, wherein said first period and said second period are equal, and said first fluctuation width and said second fluctuation width are different.

11. The optical loss filter according to Claim 7 or Claim 8, wherein said first fluctuation width and said second fluctuation width are equal, and said first period and said second period are different.

12. The optical loss filter according to Claim 7 or Claim 8, wherein said first period and said second period, and said first fluctuation width and said second fluctuation width, are respectively different.

13. The optical loss filter according to any of Claims 7 through 12, wherein, within said prescribed usage wavelength band, the order of said core mode and the coupled cladding mode coincide in each of said first and second long-period gratings.

14. The optical loss filter according to any of Claims 7 through 13, wherein one or more third long-period gratings are further provided in said optical waveguide, and the refractive index fluctuation width of the third long-period grating differs from the refractive index fluctuation width of said first and second long-period gratings.

15. The optical loss filter according to any of Claims 7 through 13, wherein one or more third long-period gratings are further provided in said optical. waveguide, and the refractive index fluctuation period of the third long-period grating differs from the refractive index fluctuation period of said first and second long-period gratings.

16. The optical loss filter according to Claim 14 or Claim 15, wherein, in said third long-period grating, the order of said cladding mode coupling with said core mode within said prescribed usage wavelength band differs from that of the cladding mode coupling with the core mode in said first and second long-period gratings.

## Fig.1A

$L_b$
(=40mm)

$L_a$
(=30mm)

100

120

110

LPG-b

$\Lambda_b$=495 $\mu$m

$\Lambda_a$=507 $\mu$m

LPG-a

## Fig.1B

| $A_b(0)$ $B_b{}^m(0)=0$ | $M_b{}^m$ | $A_b(L_b)=A_a(0)$ $B_b{}^m(L_b)=B_a{}^m(0)\neq0$ | $M_a{}^m$ | $A_a(L_a)$ $B_a{}^m(L_a)$ |
|---|---|---|---|---|

## Fig.2

L1

L2

L3

TRANSMISSION ATTENUATION (dB)

0.0
−1.0
−2.0
−3.0
−4.0
−5.0
−6.0

1510 1520 1530 1540 1550 1560 1570 1580
WAVELENGTH (nm)

## Fig.3A

## Fig.3B

## Fig.4

## Fig.5A

31

S1

37

30

33

32

34

50

300

320

51

52

310

310a

310b

53

## Fig.5B

REFRACTIVE INDEX

222

111

POSITION IN FIBER
AXIS DIRECTION

EP 1 219 985 A1

**Fig.6A**

**Fig.6B**

# *Fig.7*

## Fig.8A

LPG-d1

$\Lambda_{d1}(=343.5\,\mu m)$

$L_{d1}$
$(=22mm)$

$L_s$
$(=5mm)$

$\Lambda_{e1}(=352.5\mu m)$

$L_{e1}$
$(=7mm)$

LPG-e1

20

10

11

## Fig.8B

LPG-d2

$\Lambda_{d2}(=348\,\mu m)$

$L_{d2}$
$(=20mm)$

$L_s$
$(=5mm)$

$\Lambda_{e2}(=348\,\mu m)$

$L_{e2}$
$(=7mm)$

LPG-e2

20

10

11

## Fig.8C

LPG-d3

$\Lambda_{d3}(=347\,\mu m)$

$L_{d3}$
$(=20mm)$

$L_s$
$(=5mm)$

$\Lambda_{e3}(=351\,\mu m)$

$L_{e3}$
$(=7mm)$

LPG-e3

20

10

11

# Fig.9

## Fig.10A

S1

31

30

31

30

32

11

50

LPG-f

$\Lambda_f$ (=350 μm)

$L_f$
(=30mm)

10

51

52

53

## Fig.10B

S1

31

31

30

30

LPG-f

11

50

LPG-f'

$L_f$
(=17.5mm)

$L_s$
(=5mm)

$L_{f''}$
(=17.5mm)

LPG-f''

10

21

51

52

53

## Fig.11

## Fig.12

## Fig.13

## Fig.14

# *Fig.15*

## Fig.16

# Fig.17

# Fig.18

EP 1 219 985 A1

# Fig.19

LPG-d1

20

10

LPG-p

11

$\Lambda_p(=394\,\mu m)$

$\Lambda_{d1}(=343.5\,\mu m)$

$\Lambda_{e1}$
$(=352.5\,\mu m)$

LPG-e1

$L_p$
$(=31.5mm)$

$L_t$
$(=2mm)$

$L_{d1}$
$(=22mm)$

$L_s$
$(=5mm)$

$L_{e1}$
$(=7mm)$

*Fig.20*

# Fig.21

<table>
<tr><td colspan="2" align="center">**INTERNATIONAL SEARCH REPORT**</td><td>International application No.<br><br>PCT/JP00/06442</td></tr>
</table>

**A. CLASSIFICATION OF SUBJECT MATTER**
Int.Cl$^7$  G02B 6/16, 6/10

According to International Patent Classification (IPC) or to both national classification and IPC

**B. FIELDS SEARCHED**

Minimum documentation searched (classification system followed by classification symbols)
Int.Cl$^7$  G02B 6/00-6/54, H04B 10/00-10/20

Documentation searched other than minimum documentation to the extent that such documents are included in the fields searched
Jitsuyo Shinan Koho          1922-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)
Elsevier Science Server, SciSearch(DIALOG),
IEEE/IEE Electronic Library online[long-period <near/3> grating],
JICST FILE(JOIS)[long-period* grating] (in Japanese)

**C. DOCUMENTS CONSIDERED TO BE RELEVANT**

| Category* | Citation of document, with indication, where appropriate, of the relevant passages | Relevant to claim No. |
|---|---|---|
| Y<br>A | EP, 897124, A1 (Photonics Research Ontario),<br>17 February, 1999 (17.02.99)<br>& JP, 11-174245, A | 1-6<br>7-16 |
| Y | WO, 95/22068, A1 (UNIVERSITY OF SYDNEY),<br>17 August, 1995 (17.08.95),<br>page 4, lines 7 to 15; page 5, line 28 to page 6, line 24; Fig. 1<br>& EP, 749587, A1    & JP, 9-508713, A<br>& US, 5830622, A | 1-6 |
| A | Michiko HARUMOTO, et al., "Juuretsu Chou Shuuki Fibre Grating ni yoru L-band you Ritokutoukaki"; Transactions 1 of Electronics Society Meeting in 1999, 16 August, 1999, C-3-72, page 178 | 1-16 |
| A | LIU, Y. ET AL.: Phase shifted and cascaded long-period fiber gratings; Optics Communications, 01 June 1999, Vol.164, pp.27-31 | 1-16 |
| A | LEE, B.H. ET AL.: Dependence of fringe spacing on the grating separation in a long-period fiber grating pair; | 1-16 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 December, 2000 (13.12.00) | Date of mailing of the international search report<br>26 December, 2000 (26.12.00) |
|---|---|
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.

PCT/JP00/06442

| C (Continuation). DOCUMENTS CONSIDERED TO BE RELEVANT | | |
|---|---|---|
| Category* | Citation of document, with indication, where appropriate, of the relevant passages | Relevant to claim No. |
| | APPLIED OPTICS, 1 June 1999, Vol.38, No.16, pp.3450-3459 | |
| A | QIAN, J.R. ET AL.: Gain flattening fibre filters using phase-shifted long period fibre gratings; ELECTRONICS LETTERS, 28 May 1998, Vol.34, No.11, pp.1132-1133 | 1-16 |
| A | JP, 10-319259, A (Sumitomo Electric Industries, Ltd.), 04 December, 1998 (04.12.98) (Family: none) | 1-16 |
| P,X | Michiko HARUMOTO, et al., "Isou Shift Chou Shuuki Fibre Grating"; Electronics 1; Transactions of General Meeting in 2000,the Institute of Electronics, Information and Communication Engineers, 07 March, 2000, C-3-69, page 249 | 1-16 |

Form PCT/ISA/210 (continuation of second sheet) (July 1992)